# EUROPÄISCHE PATENTSCHRIFT

(11) **EP 0 493 546 B1**
(45) Veröffentlichungstag und Bekanntmachung des Hinweises auf die Patenterteilung: **27.03.1996**
(21) Anmeldenummer: 91911728.3
(22) Anmeldetag: 27.06.1991
(51) Int. Cl.: G01L 9/00, G01L 23/18, G01L 1/18

(54) **DRUCKGEBER ZUR DRUCKERFASSUNG IM BRENNRAUM VON BRENNKRAFTMASCHINEN**
PRESSURE SENSOR FOR DETERMINATION OF THE PRESSURE IN THE COMBUSTION SPACE OF AN INTERNAL-COMBUSTION ENGINE
CAPTEUR DE PRESSION POUR L'ENREGISTREMENT DE LA PRESSION DANS LA CHAMBRE DE COMBUSTION D'UN MOTEUR A COMBUSTION INTERNE

(30) Priorität: 18.07.1990 DE 4022781; 07.02.1991 DE 4103704
(43) Veröffentlichungstag der Anmeldung: 08.07.1992
(73) Patentinhaber: ROBERT BOSCH GMBH, D-70442 Stuttgart (DE)
(72) Erfinder: BENEDIKT, Walter, D-7014 Kornwestheim (DE); VOGEL, Manfred, D-7257 Ditzingen Heimerdingen (DE); HERDEN, Werner, D-7016 Gerlingen (DE); KONRAD, Johann, D-7146 Tamm (DE); SCHMIDT, Wolfgang, D-7143 Vaihingen/Enz (DE); TOSCH, Josef, D-7141 Schwieberdingen (DE); KUESELL, Matthias, D-7015 Korntal-Münchingen 2 (DE); STANGLMEIER, Frank, D-7141 Möglingen (DE)
(86) Internationale Anmeldenummer: DE9100523
(87) Internationale Veröffentlichungsnummer: WO9201912

(56) Entgegenhaltungen:
- EP-A- 0 118 229
- EP-A- 0 172 943
- FR-A- 2 626 670
- US-A- 4 567 751
- US-A- 4 839 708

## Beschreibung

### Stand der Technik

Die Erfindung geht aus von einem Druckgeber nach der Gattung des Anspruchs 1. Bei einem derartigen, aus der DE-OS 31 25 640.6 bekannten Druckgeber sind die piezoresistiven Meßlelemente, wie zum Beispiel Dickschichtwiderstände aus Cermet, Contactiv-Plastic oder Metall auf einem Träger aufgedruckt. Das Widerstandselement und der Träger sind möglichst nahe am Druckraum angeordnet, um den herrschenden Druck bestimmen zu können. Ferner wird das Meßsignal mit Hilfe von elektrischen Leitungen zu einer außerhalb des Gehäuses des Druckgebers angeordneten elektronischen Auswerteschaltung geführt. Dadurch müssen die piezoresistiven Elemente und die elektronischen Bauteile mit Hilfe von abgeschirmten Leitungen aufwendig miteinander verbunden werden. Da das piezoresistive Meßelement direct dem Druck ausgesetzt ist, ist es auch den im Brennraum herrschenden hohen Temperaturen ausgesetzt. Die Flammen breiten sich dort mit einer Temperatur von ca. 2000° C aus, wodurch sich Verspannungen im Gehäuse ergeben können. Dadurch wird das Drucksignal durch die hohen Temperaturen verfälscht.

Aus der US-A-4567751 ist ein Druckgeber bekannt, wobei zwischen der Membran und dem piezoelektrischen Element ein Druckübertragungsstift angeordnet ist.

Ferner ist aus der EP-A-0 179 278 ein Drucksensor bekannt, bei dem der Dickschichtwiderstand am Boden eines Trägers angeordnet ist. Dieser Drucksensor ist aber nur für die Bestimmung des Drucks in Verteilerpumpen vorgesehen. Die im Brennraum herrschenden hohen Temperaturen würden auch bei dieser Ausführung das Meßsignal verfälschen. Ferner ist bei der Ausführung dieses Drucksensors zwischen der Membran und dem Dickschichtwiderstand eine Scheibe aus elastischem Material angeordnet. Diese Zwischenscheibe ist mit einer von einem separaten Bauteil, wie dem Halteteil, erzeugten, sich nicht ändernden Anpreßkraft eingespannt. Durch die elastische Scheibe werden die elastischen Druckverformungen der Membran auf das Meßelement übertragen. Die Scheibe wird nicht plastisch verformt.

### Vorteile der Erfindung

Der erfindungsgemäße Drucksensor mit den kennzeichnenden Merkmalen des Anspruchs 1 hat demgegenüber den Vorteil, daß eine möglichst gleichmäßige Krafteinleitung über den Stempel auf das piezoresistive Meßelement möglich ist. Am Ende des Stempels auftretende Rauhigkeiten können ausgeglichen werden. Durch eine Verwendung eines relativ weichen Materials für den Stempel, aber insbesondere durch die Verwendung eines weichen Materials für das dem piezoresistiven Element zugewandten Ende des Stempels ist eine gleichmäßige Krafteinleitung über den gesamten Berührungsbereich möglich. Wird hierbei der Stempel mit einer weichen Spitze auf die das piezoresistive Element umgebende Glasschicht mit einem dem später zu bestimmenden übersteigenden Druck aufgedrückt, so wird ein nahezu lückenloser Formschluß zwischen dem Stempelende mit der Überglasung des piezoresistiven Elements erreicht. Dadurch ist eine besonders homogene Krafteinleitung möglich. Ferner kann der Durchmesser des Endes des Stempels kleiner als das Widerstandselement ausgebildet sein. Bei der Verwendung eines insbesondere halbkugelförmigen Kraftübertragungselements zwischen dem Stempel und dem piezoresistiven Element wird in besonders einfacher Weise eine homogene Krafteinleitung auf das piezoresistive Element erreicht. Entweder die Stempelspitze oder das Krafteinleitungsteil kann aus einem relativ weichen Werkstoff bestehen. Dadurch kann eine mehrteilige Ausbildung des Stempels vermieden werden. Diese Ausbildung ist mit und ohne Anprägung der Teile Stempel, Krafteinleitungsteil und Überglasung des piezoresistiven Elements denkbar, da bei der nur annähernd punktförmigen Auflage des Krafteinleitungsteils am Stempel eine homogene Krafteinleitung auf das piezoresistive Element möglich ist.

Durch Verschweißen der Membran mit dem Stempel können Meßfehler durch eine undefinierte Krafteinleitung vermieden werden. Hierzu trägt auch eine Stempelführung mit geringem Spiel von zum Beispiel 0,01 mm ≤ Stempeldurchmesser ≤ 0,1mm bei. Besteht das piezoresistive Element aus mehreren aufeinandergeschichteten Widerstandsschichten, so erhöht sich seine Dicke. Weisen diese übereinander angeordneten Widerstandsschichten eine Pyramidenform auf, so daß sich die Ränder nicht überlappen, so können Justierungenauigkeiten der Widerstandsschichten oder durch Überlappung der Ränder der Widerstandsschichten auftretende Meßfehler im Randbereich verhindert werden. Ferner ist die Krafteinleitung ausschließlich in den Bereich der obersten Schicht definiert möglich, da durch die große Dicke des in mehreren Schichten aufgebauten Widerstands verhindert wird, daß der herstellungsbedingt unebene Stempel auch in Bereichen neben der Widerstand aufliegt und dort Kraftnebenschlüsse entstehen könnten. Ferner kann eine Temperaturkompensation des piezoresistiven Meßelements bewirkt werden, indem mehrere Widerstände in einer Wheatstone'schen Brückenschaltung verschaltet sind. Dabei ist nur ein Teil der Widerstandselemente der Brücke dem Druck ausgesetzt und der andere Teil druckabgeschirmt in unmittelbarer Nähe der anderen Widerstandsschichten angeordnet. Eine derartige Anordnung ist in besonders einfacher Weise in Dickscchichttechnik realisierbar Da dadurch elektronische Bauteile zur Temperaturkompensation entfallen können, verringert sich der Aufwand um die Baugröße für die elektronische Auswerteschaltung. Dadurch kann der Drucksensor relativ klein bauen. Er weist somit eine besonders einfache und zuverlässige Konstruktion auf, die kostengünstig herstellbar ist.

Durch die in den Unteransprüchen aufgeführten Maßnahmen sind vorteilhafte Weiterbildungen des im Hauptanspruch angegebenen Sensors möglich.

### Zeichnung

Ausführungsbeispiele der Erfindung sind in der Zeichnung dargestellt und in der nachfolgenden Beschreibung näher erläutert. Die Figur 1 zeigt einen Schnitt durch einen Druckgeber, die Figur 2 eine Einzelheit und die Figur 3 ein zweites Ausführungsbeispiel.

### Beschreibung des Ausführungsbeispiels

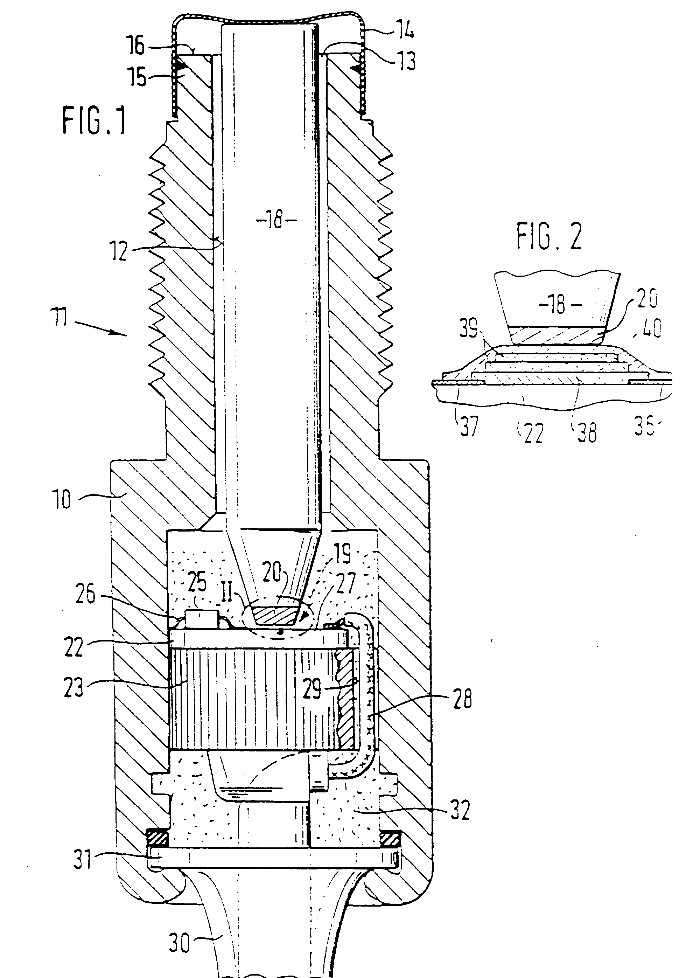

In der Figur 1 ist mit 10 das Gehäuse eines Drucksensors 11 zur Bestimmung des Drucks im Brennraum einer Brennkraftmaschine bezeichnet. Es weist eine mittige, durchgehende, abgesetzte Bohrung 12 auf. Die dem Brennraum zugewandte Öffnung 13 des Gehäuses 10 wird von einer Membran 14 abgeschlossen. Die Membran 14 ist als sogenannte Kappenmembran ausgebildet, wobei der Rand der Membran 14 umgebogen ist und über das Ende des Schafts 15 des Gehäuses 10 geschoben ist. Die Membran 14 sitzt dadurch fest am Gehäuse 10, liegt aber, um eine Beweglichkeit der Membran 14 zu gewährleisten, nicht direkt an der Stirnseite 16 des Schafts 15 an. Der Biegebereich der Membran 14 kann sich dadurch frei bewegen. Die Membran 14 ist im Bereich des Randes am Schaft 15 angeschweißt. Besonders vorteilhaft ist die Membran 14 aus einer Superlegierung das heißt aus einer Legierung von zum Beispiel 50 % Ni, 20 % Cr, 20 % Fe ausgebildet. Am mitteleren Bereich der Membran 14 liegt ein Stempel 18 mit seinem einen Ende an, der mit seinem anderen Ende an einem piezoresistiven Meßelement 19 anliegt. Das Ende des Stempels 18 kann an der Membran 14 angeschweißt sein, um eine gute und genaue Krafteinleitung zu ermöglichen. Es ist aber auch möglich, den Stempel 18 nur an die Membran 14 anzudrücken. Ferner kann der Stempel 18 mit geringem Spiel von zur Beispiel 0,01 mm < dem Durchmesser des Stempels ≤ 0,1 mm in der Bohrung 12 geführt sein. Das dem piezoresistiven Meßelement 19 zugewandte Ende des Stempels 18 kann konisch ausgebildet sein. Diese konische Ausbildung des Endes des Stempels 18 kann notwendig sein, um die sich überdeckenden Flächen des piezoresistiven Meßelement 19 und des Endes des Stempels 18 ungefähr aufeinander abzustimmen.Würde man hingegen den gesamten Stempel in seinem Durchmesser verringern, so könnte der Stempel eventuell bei der Druckübertragung abbrechen. Um eine möglichst definierte Krafteinleitung vom Stempel auf das piezoresistive Meßelement 19 zu gewährleisten, ist der Stempel 18 wenigstens im Endbereich 20 aus einem relativ weichen Werkstoff hergestellt. Dadurch ist es möglich, daß sich Oberflächenrauhigkeiten und Unebenheiten des Stempelendes nicht als Meßfehler im piezoresistiven Meßelement 19 auswirken können, indem so ein Formschluß, zwischen der Stirnfläche des Stempelendes und der Oberfläche des piezoresistiven Meßelements erreicht wird. Ferner wäre es auch denkbar, den gesamten Stempel 18 aus einem weichen Material herzustellen. Dadurch würde man aber wiederum die Steifigkeit des Stempels 18 negativ beeinflussen. Bei der Auswahl des Materials für den Stempel 18 ist auch zu berücksichtigen, daß der Stempel eine möglichst geringe Wärmeleitfähigkeit aufweisen soll, so daß die Meßsignale nicht durch Temperaturschwankungen an der Membrane durch die Temperatur der Flammfront verfälscht werden. Eine gute geringe Wärmeleitfähigkeit weist zum Beispiel Glaskeramik auf. Als Material für den Bereich 20 des Stempels 18 kann zum Beispiel relativ weiches Metall, zum Beispiel Al, Messing, Cu, Kunststoff etc. verwendet werden. Das Material für den Bereich 20 braucht keine geringe Wärmeleitfähigkeit aufweisen.

Das piezoresistive Element ist auf einem Hybrid 22 angeordnet, der an einem in die Bohrung 12 eingepreßten Gegenlager 23 anliegt. Der Träger des Hybrids 22 besteht aus einem Al₂O₃-Substrat, das auf die Stirnseite des Gegenlagers 23 aufgeklebt ist. Neben dem piezoresistiven Meßelement 19 befinden sich auf derselben Seite des Trägers des Hybrids 22 auch die elektronischen Bauteile 25 der Auswerteschaltung, wie zum Beispiel Widerstände, Transistoren, etc. Die elektronischen Halbleiterbauteile 25 und das piezoresistive Meßelement 19 sind mit Hilfe von Bonddrähten 26 und Dickschichtleiterbahnen 27 verbunden. Über eine Leitung 28 wird der Ausgang der Aufbereitungsschaltung zu einer nicht dargestellten Auswerteschaltung und Steuereinrichtung der Brennkraftmaschine geführt. Hierzu weist das Gegenlager 23 eine etwa achsparallel zur Bohrung 12 verlaufende, durchgehende Bohrung 29 auf, in der die Ableitleitung 28 geführt wird. Die Leitung 28 ist in einer Tülle 30 des die Bohrung 12 abschließenden Deckels 31 befestigt. Zum Schutz vor schädlichen. Umwelteinflüssen, wie zum Beispiel Feuchtigkeit, kann die Bohrung 12 im Bereich des piezoresistiven Meßelements 19 und der elektronischen Bauteile 25 und im Bereich zwischen dem Gegenleger 23 und dem Deckel 31 mit einer Vergußmasse 32 ausgegossen sein.

Statt einer Bohrung 29 kann auch am Gegenlager 23 ein Segment zur Durchführung der Leitung 28 ausgeschnitten sein. Das Gegenlager 23 kann aber auch in eine Bohrung 12 des Gehäuses 10 eingeschraubt sein.

In der Figur 2 ist die erfindungsgemäße Ausbildung des piezoresistivven Meßelements dargestellt. Auf dem Träger des Hybrids 22 aus Al₂0₃-Substrat sind eine erste (36) und eine zweite Leiterbahn 37 aufgedruckt. Zwischen den beiden Leiterbahnen 36, 37 ist eine erste Widerstandsschicht 38 aufgedruckt, wobei die Enden der Widerstandsbahn 38 mit den Enden der beiden Leiterbahnen 36, 37 überlappen, um einen elektrischen Kontakt herzustellen. Auf diese erste Widerstandsbahn 38 sind schichtartig mehrere weitere Widerstandsbahnen 39 aufgedruckt. Diese weiteren Widerstandsbahnen sind dabei so angeordnet, daß eine Art Pyramide entsteht, was bedeutet, daß die Widerstände in aufsteigender Schichtenfolge jeweils kürzer ausgebildet sind und sich somit im Randbereich nicht überdecken oder überlappen. Die gesamte pyramidenförmige Anordnung der Widerstandsbahnen. 38, 39 und wenigstens die Enden der Leiterbahnen sind mit einer Glasschicht 40, hergestellt aus einer Glaspaste, überdeckt, um eine elektrische und mechanische Isolierung zu erreichen. Das Ende des Stempels 18 liegt mit seinem Bereich 20 so auf der Glasschicht 40 bzw. auf der letzten der Widerstandsbahnen 39 auf, daß der Stempel 18 ziemlich zentral nur auf dieser Widerstandsbahn 39 aufsetzt. Dies bedeutet, daß die Kraft ausschließlich im Bereich der obersten Widerstandsschicht eingeleitet wird und so Kraftnebenschlüsse vermieden werden.

Es ist aber auch möglich, statt einem einzigen piezoresistiven Meßelement mit einer pyramidenförmigen Ausbildung zusätzlich noch ein weiteres piezoresistives Meßelement auf dem Hybrid 22 anzuordnen oder gar 4 Meßelemente. Hierbei sind diese Widerstandselemente in einer Wheatstone'schen Halb- oder Vollbrückenschaltung miteinander verschaltet. Eines der beiden oder 1 bis 2 von vier piezoresistiven Meßelemente wird dann vom Stempel 18 mit Druck beaufschlagt, während das andere piezoresistive Meßelement oder 2 bis 3 andere Meßelemente möglichst nahe im Bereich des ersten oder den beiden ersten piezoresistiven Meßelementen angeordnet sind, aber nicht mit Druck beaufschlagt sind. Dadurch ist es möglich, eine Temperaturkompensation durchzuführen, ohne zusätzliche elektronische Bauteile für eine Kompensation von Temperaturschwankungen in der Auswerteschaltung vorsehen zu müssen.

Die verschiedenen Widerstandsbahnen 38, 39 können in oder quer zur Richtung des die Widerstandsbahnen durchfließenden Stroms gedrückt werden.

Für eine besonders homogene Krafteinleitung auf das piezoresistive Element 19 ist der Stempel 18 mit seiner weichen Spitze auf das piezoresistive Element 19 und hier insbesondere auf die Glasschicht 40 aufzudrücken. Der Druck sollte hierzu größer sein als der später zu bestimmende Druck. Hierzu kann ein Vielfaches des Maximaldrucks auf die Membran und dem Stempel aufgebracht werden oder auch beim Einpressen des Gegenlagers 23 die vorgesehene Position bewußt überpreßt werden. Hierdurch entsteht eine Anprägung des weichen Stempelendes 20.

Durch die erfindungsgemäße Anordnung des piezoresistiven Bauelements 19 sind besonders gute Meßwerte möglich. Ferner ist durch die Anordnung der Bauteile 25 auf einem Hybrid 22 eine besonders einache Montage des Drucksensors 11 möglich. Außerhalb des Gehäuses 10 kann bereits das piezoresistive Element 19, die elektronischen Bauteile 25 und das Gegenlager 23 mit den Ableitungen 28 als eine Baueinheit vormontiert werden. Bereits außerhalb des Gehäuses 10 des Drucksensors 11 können somit die Bauteile 25 und das piezoresistive Meßelement 19 auf seine Funktionsfähigkeit hin überprüft werden. Bei der Endmontage braucht somit nur noch die vormontierte, bereits überprüfte Einheit von einer Öffnung der Bohrung 12 her in das Gehäuse 10 mit dem bereits eingesetzten Stempel 18 eingeschoben zu werden, bis sie am Stempel 18 und dieser an der Membran 14 anliegt. Da das Gegenlager 23 in das Gehäuse 10 eingepreßt ist, ist die Einheit im Gehäuse 10 leicht zentriert und fixiert.

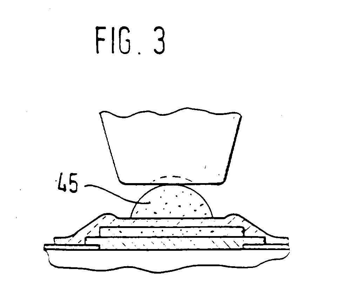

Im Ausführungsbeispiel nach der Figur 3 ist zwischen dem Stempel 18 und dem piezoresistiven Element 19 ein zusätzliches Krafteinleitungsteil 45 angeordnet. Dieses Krafteinleitungsteil 45 weist auf der dem Stempel 18 zugewandten Seite eine gekrümmte Oberfläche auf, insbesondere kann es halbkugelförmig ausgebildet sein. Entweder die Stempelspitze 20 oder das Krafteinleitungsteil 45 sollte aus relativ weichem Material bestehen. Durch die gekrümmte Oberfläche des Krafteinleitungsteils 45 wird eine nahezu punktförmige Anlage des Krafteinleitungsteils 45 am Stempel 18 und eine homogene Krafteinleitung auf das piezoresistive Element 19 erreicht. Dieses Ausführungsbeispiel nach der Figur 3 kann mit oder ohne Anprägung während der Montage hergestellt und eingesetzt werden. Es ist keine umfangreiche Justage des Stempels 18 auf dem piezoresistiven Element 19 erforderlich. Um ein Verrutschen des Krafteinleitungsteils 45 während der Montage sowohl gegenüber dem Stempel 18 als auch gegenüber der piezoresistiven Element 19 zu verhindern, kann mindestens eine dieser Kontaktfläche verklebt oder verglast sein.

## Patentansprüche

1. Druckgeber zur Druckerfassung im Brennraum von Brennkraftmachinen, insbesondere von Kraftfahrzeugen, in dessen Gehäuse (10) ein aus einem piezoresistiven Werkstoff bestehendes Sensorelement (19) angeordnet ist, dadurch gekennzeichnet, daß zwischen einer Membran (14) und dem Element (19) ein Stempel (18) angeordnet ist, der den zu bestimmenden Druck auf das Element (19) einleitet, und daß mindestens das dem piezoresistiven Element (19) zugewandte Ende des Stempels (18) aus einem relativ weichen Material besteht, so daß der Stempel (18) auf das Element (19) während der Montage mit Hilfe eines den zu messenden übersteigenden Druck anprägbar ist, so daß nach der Montage ein nahezu lückenloser Formschluß des Endes des Stempels (18) mit dem Element (19) entsteht.

2. Druckgeber zur Druckerfassung im Brennraum von Brennkraftmaschinen, insbesondere von Kraftfahrzeugen, in dessen Gehäuse (10) ein aus einem piezoresistiven Werkstoff bestehendes Sensorelement (19) angeordnet ist, dadurch gekennzeichnet, daß zwischen einer Membran (14) und dem Element (19) in folgender Reihenfolge ein den zu bestimmenden Druck einleitender Stempel (18) und ein Kraftübertragungsteil (45) angeordnet sind, wobei das Kraftübertragungsteil (45) eine zum Stempel (18) hin gekrümmte Oberfläche aufweist und daß entweder das Kraftübertragungsteil (45) oder mindestens das dem Kraftübertragungsteil (45) zugewandte Ende des Stempels (18) aus einem relativ weichen Material besteht, so daß eine homogene Krafteinleitung auf das Element (19) möglich ist.

3. Druckgeber nach Anspruch 2, dadurch gekennzeichnet, daß das Kraftübertragungsteil (45) eine Halbkugel ist.

4. Druckgeber nach einem der Ansprüche 1 bis 3, dadurch gekennzeichnet, daß das piezoresistive Element (19) aus mehreren aufeinander gedruckten Widerstandsschichten (38, 39) besteht.

5. Druckgeber nach Anspruch 4, dadurch gekennzeichnet, daß die Widerstandsschichten (38, 39) pyramidenartig aufeinander angeordnet sind.

6. Druckgeber nach einem der Ansprüche 1 bis 5, dadurch gekennzeichnet, daß die Widerstandsschichten (38, 39) von einer elektrisch isolierenden Glasschicht (40) abgedeckt sind.

7. Druckgeber nach Anspruch 6, dadurch gekennzeichnet, daß das Kraftübertragungsteil (45) und die Glasschicht miteinander verglast sind.

8. Druckgeber nach einem der Ansprüche 1 bis 7, dadurch gekennzeichnet, daß der Stempel (18) und die Membran (14) miteinander verschweißt sind.

9. Druckgeber nach einem der Ansprüche 1 bis 8, dadurch gekennzeichnet, daß der Stempel (18) aus Glaskeramik besteht.

10. Druckgeber nach einem der Ansprüche 1 bis 9, dadurch gekennzeichnet, daß der Stempel (18) aus Metall besteht.

11. Druckgeber nach einem der Ansprüche 1 bis 10, dadurch gekennzeichnet, daß der Stempel (18) gleitend im Gehäuse (10) geführt ist.

12. Druckgeber nach einem der Ansprüche 1 bis 11, dadurch gekennzeichnet, daß das dem piezoresistiven Element (19) zugewandte Ende des Stempels (18) einen geringeren Durchmesser aufweist als das der Membran (14) zugewandte Ende des Stempels (18).

13. Druckgeber nach Anspruch 12, dadurch gekennzeichnet, daß das der piezoresistiven Element (19) zugewandte Ende (20) des Stempels (18) einen geringeren Durchmesser aufweist, als die oberste Widerstandsbahn (39) des Elements (19).

## Claims

1. Pressure sensor for detecting the pressure in the combustion chamber of internal-combustion engines, in particular of motor vehicles, in the housing (10) of which there is arranged a sensor element (19), consisting of a piezoresistive material, characterised in that between a diaphragm (14) and the element (19) there is arranged a punch (18), which introduces the pressure to be determined onto the element (19), and in that at least the end of the punch (18) facing the piezoresistive element (19) consists of a relatively soft material, with the result that the element (19) can be impressed with the punch (18) during assembly with the aid of a pressure exceeding the pressure to be measured, so that after assembly a virtually uninterrupted form fit of the end of the punch (18) with the element (19) is produced.

2. Pressure sensor for detecting the pressure in the combustion chamber of internal-combustion engines, in particular of motor vehicles, in the housing (10) of which there is arranged a sensor element (19), consisting of a piezoresistive material, characterised in that between a diaphragm (14) and the element (19) there are arranged in the following sequence a punch (18), introducing the pressure to be determined, and a force-transferring part (45), the force-transferring part (45) having a surface curved towards the punch (18), and in that either the force-transferring part (45) or at least the end of the punch (18) facing the force-transferring part (45) consists of a relative soft material, thus allowing a homogeneous introduction of force onto the element (19).

3. Pressure sensor according to Claim 2, characterised in that the force-transferring part (45) is a hemisphere.

4. Pressure sensor according to one of Claims 1 to 3, characterised in that the piezoresistive element (19) comprises a plurality of resistive films (38, 39) printed one on top of the other.

5. Pressure sensor according to Claim 4, characterised in that the resistive films (38, 39) are arranged one on top of the other in a pyramid-like manner.

6. Pressure sensor according to one of Claims 1 to 5, characterised in that the resistive films (38, 39) are covered by an electrically insulating glass layer (40).

7. Pressure sensor according to Claim 6, characterised in that the force-transferring part (45) and the glass layer are glazed to each other.

8. Pressure sensor according to one of Claims 1 to 7, characterised in that the punch (18) and the diaphragm (14) are welded to each other.

9. Pressure sensor according to one of Claims 1 to 8, characterised in that the punch (18) consists of glass ceramic.

10. Pressure sensor according to one of Claims 1 to 9, characterised in that the punch (18) consists of metal.

11. Pressure sensor according to one of Claims 1 to 10, characterised in that the punch (18) is guided in a sliding manner in the housing (10).

12. Pressure sensor according to one of Claims 1 to 11, characterised in that the end of the punch (18) facing the piezoresistive element (19) has a smaller diameter than the end of the punch (18) facing the diaphragm (14).

13. Pressure sensor according to Claim 12, characterised in that the end (20) of the punch (18) facing the piezoresistive element (19) has a smaller diameter than the uppermost resistor run (39) of the element (19).

## Revendications

1. Capteur de pression pour détecter la pression dans la chambre de combustion d'un moteur à combustion interne, notamment d'un véhicule automobile, dont le boîtier (10) comporte un élément de capteur (19) en matière piézo-résistante, caractérisé en ce qu'entre une membrane (14) et l'élément (19) on a un poinçon (18) qui transmet la pression à déterminer à l'élément (19) et en ce qu'au moins l'extrémité du poinçon (18) tournée vers l'élément piézo-résistant (19) est en un matériau relativement mou, de sorte que le poinçon (18) est écrasé sur l'élément (19) pendant le montage à l'aide d'une pression dépassant la pression à mesurer, pour qu'après le montage il y ait une liaison par la forme pratiquement sans faille entre l'extrémité du poinçon (18) et l'élément (19).

2. Capteur de pression pour détecter la pression dans la chambre de combustion d'un moteur à combustion interne, notamment d'un véhicule automobile dont le boîtier (10) comporte un élément de capteur (19) en un matériau piézo-résistant, caractérisé en ce qu'entre une membrane (14) et l'élément (19) on a dans l'ordre, un poinçon (18) qui induit la pression à définir et une pièce de transmission de force (45), la pièce de transmission de force (45) présente une surface courbe par rapport au poinçon (18) et soit la pièce de transmission de force (45), soit au moins l'extrémité du poinçon (18) tournée vers la pièce de transmission de force (45), sont en un matériau relativement mou pour permettre d'induire de façon homogène la force dans l'élément (19).

3. Capteur de pression selon la revendication 2, caractérisé en ce que la pièce de transmission de force (45) est une demi-sphère.

4. Capteur de pression selon l'une des revendications 1 à 3, caractérisé en ce que l'élément piézo-résistant (19) se compose de plusieurs couches résistantes (38, 39) imprimées l'une sur l'autre.

5. Capteur de pression selon la revendication 4, caractérisé en ce que les couches résistantes (38, 39) sont superposées de manière pyramidale.

6. Capteur de pression selon l'une des revendications 1 à 5, caractérisé en ce que les couches résistantes (38, 39) sont recouvertes d'une couche de verre (40) assurant l'isolation électrique.

7. Capteur de pression selon la revendication 6, caractérisé en ce que la pièce de transmission de force (45) et la couche de verre sont vitrifiées.

8. Capteur de pression selon l'une des revendications 1 à 7, caractérisé en ce que le poinçon (18) et la membrane (14) sont soudés.

9. Capteur de pression selon l'une des revendications 1 à 8, caractérisé en ce que le poinçon (18) est en céramique de verre.

10. Capteur de pression selon l'une des revendications 1 à 9, caractérisé en ce que le poinçon (18) est en métal.

11. Capteur de pression selon l'une des revendications 1 à 10, caractérisé en ce que le poinçon (18) est guidé en coulissement d'un boîtier (10).

12. Capteur de pression selon l'une des revendications 1 à 11, caractérisé en ce que l'extrémité du poinçon (18) tournée vers l'élément piézo-résistant (19) a un diamètre plus faible que l'extrémité du poinçon (18) tournée vers la membrane (14).

13. Capteur de pression selon la revendication 12, caractérisé en ce que l'extrémité (20) du poinçon (18) tournée vers l'élément piézo-résistant (19) a un diamètre plus faible que le chemin résistant supérieur (39) de l'élément (19).
